# EUROPEAN PATENT APPLICATION

(11) **EP 1 978 621 A1**
(43) Date of publication of application: **08.10.2008**
(21) Application number: 07105758.2
(22) Date of filing: 05.04.2007
(51) Int. Cl.: H02M 3/155, H02J 7/00

(54) **Universal charging device and method of charging a battery**

(71) Applicant: Ferm B.V., 8028 PM Zwolle (NL)
(72) Inventor: Woelders, Niels Jacob, 200081 Shanghai (CN)
(74) Representative: Viering, Jentschura & Partner

(57) **Abstract**

The invention provides a universal charging device, an arrangement therewith and a method of charging a battery. The universal charging device comprises a voltage converter (101,102,103,104) being connected to the battery (300) and having a switching element (101), for applying a direct voltage to said battery (300), a controller (200) connected to the voltage converter (101,102,103,104), wherein the controller (200) is arranged to measure a charging current flowing to the battery (300), and to control the switching element (101) on a pulse-width-modulation basis.

## Description

The invention is directed to a universal charging device for charging a rechargeable battery, an arrangement for charging a battery therewith comprising a controller and a method of charging a rechargeable battery.

Many small electrical appliances, such as power tools and watches, are driven by batteries such that one can get rid of electrical power lines and thus have a better mobility. However, batteries often contain a plurality of heavy metals which can cause environmental damages. Therefore, very often rechargeable batteries are used, which can be used repeatedly after being recharged by a charging device device with electrical energy. Thus, the amount of used batteries can be reduced very effectively.

Normally, the charging device transforms an alternating voltage to a direct voltage, which can be used to charge batteries. Since simple charging device devices apply a constant current to batteries care has to be taken to avoid the battery for not being charged too long. If the battery is charged with a constant current for too long, this can result in heating and damaging of the battery and/or the charging device. Therefore, a fixed current may be either to high for a low voltage battery or may be to low for a higher voltage battery. To overcome this problem, more sophisticated charging device devices are known, wherein the charging current and/or the charging voltage are monitored, and controlled on the basis of the measured values, such that an overloading of the battery can be prevented. However, such charging devices can be expensive.

Therefore, it is an object of the invention to provide a universal charging device with a low price, which is adapted for charging batteries having a wide range of voltages.

The problem will be solved by a universal charging device and a method of and an arrangement for charging a battery with the features according to the independent claims 1, 10 and 12. Further developments and advantageous embodiments are objects of the depending claims.

The invention provides a universal charging device for charging a rechargeable battery comprising a voltage converter adapted for receiving a voltage from a direct current voltage source and to be connected to the battery, having a switching element for applying a direct voltage to said battery, a controller connected to the voltage converter, wherein the controller is designed to measure a charging current flowing to the battery and to control the switching element on a pulse-width-modulation (PWM) basis.

The invention additionally provides a method of charging a rechargeable battery comprising the steps of applying a direct voltage to said battery by a switching element of a voltage converter, monitoring a charging current flowing into the battery, and controlling said switching element by a pulse width modulation.

Furthermore, the invention provides an arrangement for charging a battery comprising a controller and an universal charging device according to the invention.

According to the invention in the charging device an electrical or electronic element is used, at which the instantaneous voltage and current differs from supplied external voltages and currents respectively after switching processes like connecting or disconnecting the element to a voltage supply. A corresponding feature of those elements can be the ability of either storing electrical energy or still producing electrical energy after been cut off from a voltage supply. Such elements can be an inductance or a capacitor. In the latter use is made of the charging and discharging behaviour, which both exhibit a characteristic exponential time dependence of the instantaneous voltage and current including an exp(- t/τ_{c}) term and [1 - exp(- t/τ_{c})] term respectively. The behaviour of an inductance being influenced by an induction term (- L di/dt) is also given by an exponential time dependence. Thereby the switch-on current increases like [1 - exp(- t/τ_{ind})], while the switch off current is characterized by an exponentially decaying term.

According to the invention a cycle of switching between a state, where the element is connected to an external power supply and a state, where the element is disconnected from the external power supply, is used to store electrical energy, which can either be used to separately charge the battery or to charge the battery together with the electrical energy externally applied. Inventively the duration of a capacitor or an inductance being connected to (on-state) and being disconnected from a DC-voltage supply (off-state) is varied. Such a variation can either be achieved in periodically switching on and off or by choosing different durations of the on- and off-state (tₒₙ, t_{off}), i.e. varying the duty cycle defined by D = tₒₙ/T, T being the commutation period. D is related to tₒₙ, t_{off} by the equations D = tₒₙ/T and t_{off} = T - D•T. When using an inventive charging device having an inductance in a pulse width modulation technique the instantaneous voltage and current to be used for charging or recharging the battery become a function of externally applied input voltage (V_{DD}), the duty cycle (D), the inductivity L and the commutation period (T). It even can be achieved, that the instantaneous charging voltage/current can be kept in a voltage range ΔV given by a maximum voltage/current V_{Max}/I_{Max} and an minimum voltage/current V_{Min}/I_{Min} ≠ 0.

The universal charging device for charging and recharging respectively a rechargeable battery according to the present invention has the advantage that said universal charging device is well adjustable to different types of rechargeable batteries. Especially, the universal charging device according to the present invention can be automatically adapted to both batteries having a low voltage as well as having a high voltage. Further, the universal charging device for charging a rechargeable battery according to the present invention exhibits the advantage that the manufacturing of such a universal charging device can be done at a low price. Furthermore, the method of charging a rechargeable battery according to the present invention advantageously prevents an overheating and/or damaging of the battery.

In an embodiment of the universal charging device according to the present invention, the voltage converter is a DC-DC converter. An embodiment of the universal charging device according to the present invention the voltage converter can comprise an inductance and/or a capacitance. The inductance and/or the capacitance in combination with a resistor is adapted to limit the current flowing in the universal charging device and the rechargeable battery, such that neither the universal charging device nor the rechargeable battery will be damaged.

Another embodiment of the universal charging device according to the present invention comprises a buck converter. According to the invention the buck converter can be operated in a continuos mode to avoid the current falling to zero during the commutation cycle. Also the buck converter can be operated in a discontinuous mode, which is advantageous if the amount of electrical energy required to recharge the battery is small. In this operating mode the time necessary for a supply of energy is lower than the whole commutation period and therefore the current through a storing element, e.g. an inductance, falls to zero during part of the period.

Another embodiment of the universal charging device according to the present invention comprises a boost converter or depending on the operating conditions even a buck boost converter. A boost converter (step-up converter) allows to use an output voltage for recharging the battery, which is higher than the input DC-voltage of the DC-voltage source.

In still another embodiment of the universal charging device according to the present invention the voltage converter comprises a transformer. If the voltage converter is formed using a transformer, a rectifier may be necessary for converting an alternating voltage into a direct voltage.

In another embodiment of the universal charging device according to the present invention, the switching element includes a field effect transistor (FET), especially a thin film transistor (TFT). Also a bipolar transistor can be used as switching element.

In a converter according to an embodiment of the present invention, switching on/off the field effect transistor (FET) is controlled dependent on the current flowing between the converter and the rechargeable battery. Therefore, rechargeable batteries having a wide range of voltages can be recharged efficiently even when using a power supply having a fixed output voltage.

In another embodiment of the universal charging device according to the present invention, the switching element is controlled by adjusting the frequency and/or the duty cycle of changing between an on- and/or off-state. Adjusting the frequency (f = 1/T) and/or the duty cycle (D) according to predetermined data can prevent generation of too much heat in the battery to be charged.

In an aspect of the method of charging a rechargeable battery according to the present invention, a switching frequency and/or a duty cycle of a procedure changing the electrical conductance status of said switching element are controlled. Controlling the switching frequency (f=1/T) and/or the duty cycle (D) can be adjusted according to predetermined data. Thus, the charging current can be adjusted without generating too much heat.

Embodiments of the invention are examplarily illustrated in the following figures, which partly for the reason of clarity are simplified, and the following detailed description. Therein same elements are referred to by the same reference numerals.
FIG. 1 shows a simplified block diagram of an embodiment of the universal charging device according to the invention;
FIG. 2A shows a first embodiment of a voltage converter;
FIG. 2B shows a second embodiment of a voltage converter;
FIG. 2C shows a further embodiment of a voltage converter to be used in an inventive charging device;
FIG. 3 shows an embodiment of the universal charging device according to the invention; and
FIG. 4 diagrammatically shows a variation with time of voltages at elements of the inventive charging device.

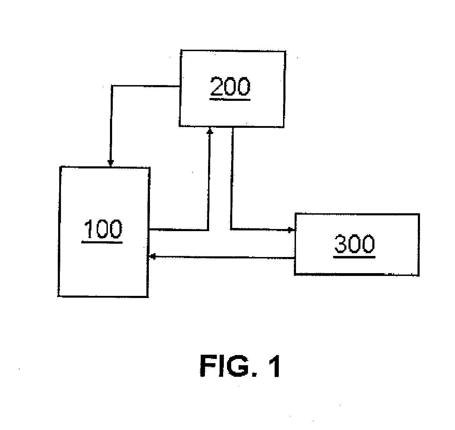

FIG. 1 shows a simplified illustration of an arrangement to realize the inventive technique of charging a rechargeable battery. A rechargeable battery 300 is connected to a voltage converter 100 to be electrically charged by a voltage converter in cooperation with a controller 200. The controller 200 is connected to the battery 300 and to the voltage converter 100, and is also configured to measure and to monitor an electrical current flowing from the controller 200 into the battery 300. The controller 200 is also connected to the voltage converter 100 such that a supply voltage, i.e. a direct voltage (DC), can be applied to the voltage converter 100 on the basis of a measured current flowing from the voltage converter 100 to the battery 300.

Although not shown, the voltage converter 100 and the controller 200 are both connected to the supply voltage, preferably a direct voltage (DC), and to ground potential.

As will be explained in more detail later, the supply voltage will be applied to the battery 300 on a pulse-width-modulation basis, such that an overheating and/or damaging of the battery can be prevented. The voltage converter 100 is a DC-DC converter. Preferably the voltage converter 100 is also adapted to increase the supply voltage or to decrease the supply voltage for applying this amended voltage to the battery to be charged. Preferably, the voltage converter 100 provides an actual charging voltage to the battery, which is lower than the supply voltage.

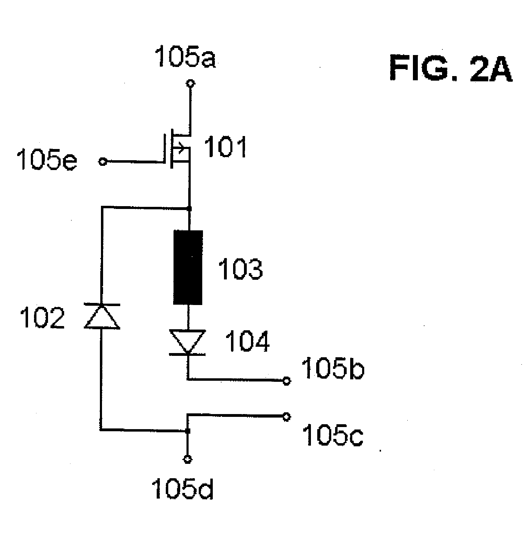

FIG. 2A shows a first embodiment of a DC-DC converter 100 having a switching element 101, a first diode 102, an inductance 103, and a second diode 104. The switching element 101 preferably is a field effect transistor (FET), which particularly can be produced in thin film technique as a thin film transistor (TFT).

The switching element 101 of the DC-DC converter 100 as shown in Fig. 2A is a metal-oxide semiconductor field effect transistor (MOSFET) of the depletion type with a p-channel. A drain contact of the FET 101, i.e. of the switching element, is connected to a terminal 105a. A source contact of the FET 101 is connected to a first terminal of the inductance 103 as well as to a cathode terminal of the first diode 102. A second terminal of the inductance 103 is connected to an anode terminal of the second diode 104, and a cathode terminal of the second diode 104 is connected to terminal 105b. A terminal 105c is connected to a terminal 105d and to an anode terminal of the first diode 102. A gate terminal of the FET 101 is connected to a terminal 105e.

Terminal 105a is supplied with a supply voltage V_{DD}, terminals 105b and 105c are connected to the battery (not shown) such that electrical energy can be transmitted to the battery. Terminal 105d is preferably connected to ground potential (GND). Terminal 105e is connected to the controller (not shown), such that the FET 101 may be controlled, i.e. switched on/off, by the controller.

In operation the FET 101 of the DC-DC converter 100 at first is switched on. In other words, an appropriate voltage is applied to the gate of the FET 101 via terminal 105e. Therefore, a current flows from the terminal 105a, connected to the supply voltage V_{DD}, to terminal 105b via the FET 101, the inductance 103 and the diode 104. As noted above, the battery is connected to terminals 105b and 105c, such that, at this moment, a current flows through the battery charging the battery. At the same time, the current is measured and monitored by the controller 200. The current also flows from terminal 105c to terminal 105d, and, thus, to the ground potential (GND). As a result the battery 300 will be charged. However, the current flowing through the battery increases with a time-delay because of the inductance 103.

After switching off the FET 101 by changing the voltage applied to the gate of the FET 101 the inductance 103 functions as a temporary voltage source due to electromagnetic induction. This creates a current flow from the inductance 103 to the battery 300 (via terminals 105b, 105c) via the diode 104. In this case the current decreases with time depending on the inductivity value L of the inductance 103. Herein, the current will vary slowly for a high inductivity value L, and will vary rapidly for a small inductivity value L. A current flowing in the opposite direction is prevented by the diodes 102 and 104.

In a conventional DC-DC converter, the FET 101 is switched on/off according to a predetermined ratio. In contrast to this conventional converter, in a DC-DC converter 100 according to an embodiment of the invention, switching on/off of the FET 101 is controlled dependent on the current flowing between the DC-DC converter 100 and the battery 300. Therefore, rechargeable batteries having a wide range of voltages can be recharged efficiently even when using a power supply with a fixed output voltage V_{DD}.

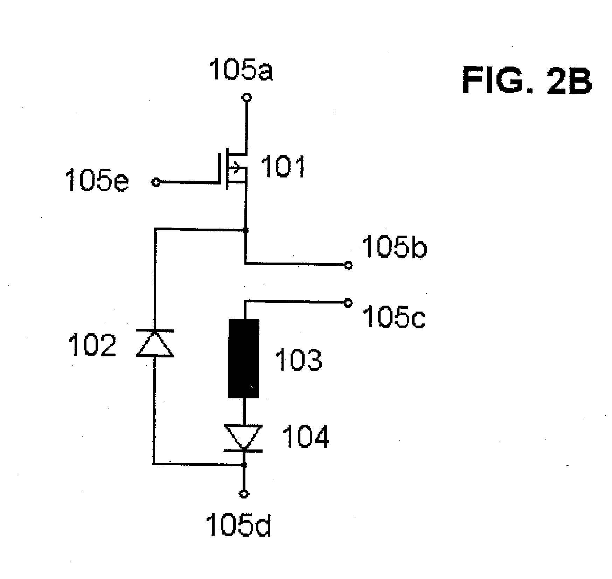

FIG. 2B shows a second embodiment of a DC-DC converter 100 having the FET 101 and the second diode 104 together with their respective connections as already shown in FIG. 2A. The terminal 105c is connected to the first terminal of the inductance 103, and the second terminal of the inductance 103 is connected to the anode terminal of the second diode 104. The cathode terminal of the second diode 104 is connected to terminal 105d and to the anode terminal of the first diode 102.

Again terminal 105a is supplied with a supply voltage V_{DD}, terminals 105b and 105c are to be connected to the battery (not shown).

In contrast to the first embodiment of the DC-DC converter 100, in the second embodiment, the inductance 103 is positioned between terminal 105c and ground potential (GND). That means, the inductance 103 can be mounted on a negative side of the battery 300 or on a positive side of the battery 300. Operating the second embodiment of the DC-DC converter 100 is similar to the operation of the first embodiment of the DC-DC converter 100, mentioned above, and, thus, the description will not be repeated.

In a further embodiment of the DC-DC converter 100 a similar DC-DC converter 100 may be formed using a capacitor instead of the inductance 103. However, such a DC-DC converter is not shown in the figures.

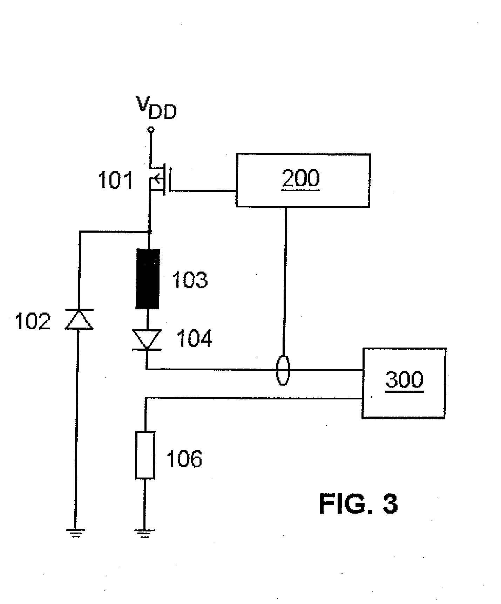

In addition to the DC-DC converter shown in FIG. 2A, FIG. 3 also shows the controller 200, the battery 300 and a resistor 106. In detail the controller 200 is connected to the gate of the FET 101. Further, the controller 200 is adapted to measure the current flowing to the battery 300. A first contact of the battery 300 is connected to the cathode of the diode 104, and a second contact of the battery 300 is connected to a first contact of the resistor 106, whose second contact is connected to ground potential (GND). An anode of the diode 102 is also connected to ground potential (GND) .

Therefore, operation of the universal charging device shown in FIG. 3 is similar to the operation described with reference to FIG. 2A. Especially in the case of FIG. 3, when the FET 101 is switched off, a current created by a voltage V_{ind} = -L dI/dt induced in the inductance 103 flows in a loop formed by the inductance 103, the diode 104, the battery 300, the resistor 106 and the diode 102. However, the current has the same direction as the current flowing during the conducting on-state of the FET 101 and decays with a time constant τ_{ind} = L/R. The resistor 106 is used and adapted such as to limit the current flowing in the universal charging device to avoid the battery 300 being damaged by overheating for example.

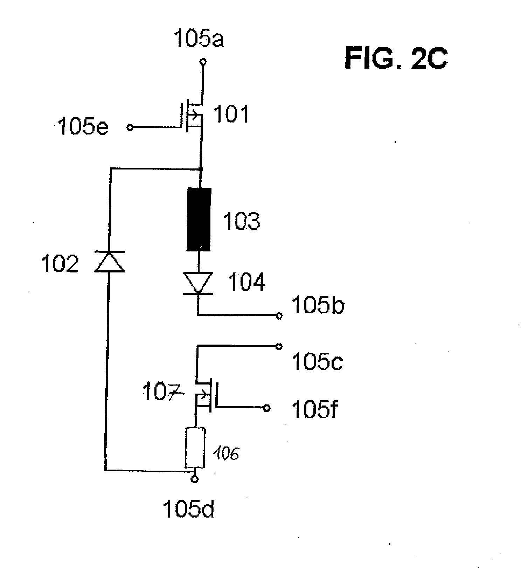

The embodiment of an inventive charging device as depicted in Fig. 2C comprises a n-channel depletion type (normally on) MOSFET 107 and the resistor 106 in addition to electronic elements already shown in Figs. 2A. The p-channel MOSFET 101 and the resistor 106 are connected to terminal 105c of the battery 300. A terminal 105e linked to the gate of the MOSFET 107 can be connected with a controller 200 to receive a gate-source switching voltage. As already discussed in relation to Fig. 2B the n-channel MOSFET 107 controlled by the controller 200 is used to connect the resistor 106 to the terminal 105c of the battery 300 in order to adapt the charging current to appropriate values. Thus, damaging of the battery 300 due to a current exceeding the range of acceptable currents to be used for charging the battery 300 can be avoided.

By such a combination of a p-channel MOSFET and a n-channel MOSFET either a charging operation of the rechargeable battery 300 using an external voltage input V_{DD} into terminal 105a or a charging procedure using a current created by an induced voltage V_{ind} generated in the inductance 103 after being cut off from the external voltage supply can be realized according to the invention.

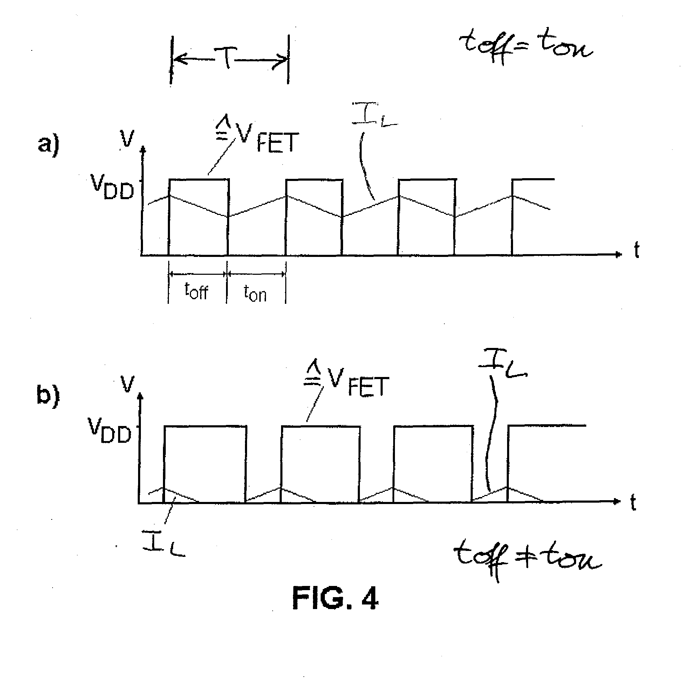

Partly simplified diagramms of Fig. 4 exhibit the time development of current I_{L} at the inductance 103 and the commutation cycle as given by the switching procedure at the FET 101 for the DC-DC converter shown in FIG. 2A. When the FET 101 is switched on, the resistance between the source and drain contacts of the FET 101 will become very small, and the current I_{L} at the inductance 103 will rise. Under the assumption that the voltage drop at the FET 101 can be neglected, the entire supply voltage V_{DD} will drop at the inductance 103 and the battery connected to terminals 105b and 105c. The voltage at the inductance 103 is due an induced voltage V_{ind}= - L•dI/dt not immediately equal to the voltage V_{DD}. It approaches the voltage V_{DD} with a characteristic time constant τ_{ind}. In more detail, the voltage will rise slowly with a high inductivity L of the inductance 103 and faster with an inductivity L being smaller. It increases with time t according to [1-exp(-τ_{ind}/t)] with τ_{ind} = L/R, R being the electrical resistance along the inductance 103 and L the inductivity of the inductance 103.

On the other hand, when the FET 101 is switched off, due to the very high electrical resistance between the source contact and the drain contact of the FET 101, nearly the entire supply voltage V_{DD} will drop at the FET 101. However, in this moment the electrical energy stored in the inductance 103 will be discharged over the loop formed by the inductance 103, the diode 104, the battery, and the diode 102, and the battery will thus be further charged. In other words, when the FET 101 is switched off, the inductance 103 serves as a voltage/current source providing the charging current for the battery 300. However, in this case, when the inductance 103 is discharged, the current I_{L} at the inductance 103 and the battery 300 will decrease with time, see Fig. 4.

The maximum voltage drop at the inductance 103 may be smaller than the supply voltage V_{DD}, and the minimum voltage V_{Min} may be larger than ground potential (GND). However, this depends on the duty cycle D of the FET 101, which is given by the ratio of the time t_{off}, when the FET is switched off, and the switch-on time tₒₙ, when the FET is switched on and the inductivity L of the inductance 103.

FIG. 4b schematically shows the situation with the duty cycle D being different to the one mentioned above. Here the FET 101 is switched off for a time t_{off}, which is longer the conducting time tₒₙ. Therefore, the current I_{L} at the inductance 103 will rise to a lower level as mentioned above, and finally will even decrease to zero during the time t_{off}. In this case, the battery 300 is at least at some time neither charged by the supply voltage V_{DD} nor by the electrical energy stored in the inductance 103. Thus, this duty cycle D should be used for low voltage, low current batteries.

In the case mentioned above, only the duty cycle D has been changed. Preferably, the frequency f=1/T of the switching procedure of the FET 101 may be also changed. In general, one can see that the charging current of the battery 300 is alternating in a current range between a minimum current I_{Min} and a maximum current I_{Max} (see Fig. 4a). Also the voltage varies in a voltage band given by a minimum voltage V_{Min} and a maximum voltage V_{Max}. The upper and lower values V_{Min}, V_{Max} can be adjusted to desired values such that both batteries having a low voltage and batteries having a higher voltage can be efficiently charged by the universal charging device according to the invention.

In order to solve the problem of providing a universal charging device for a very low price, a fixed power supply output voltage V_{DD} will be used. However in this case, the problem has to be overcome that both the charging device and/or the battery will get hot due to the fixed supply voltage and, on the other hand, the charging current will be to high for low voltage batteries and to low for higher voltage batteries.

Therefore, the charging process of a rechargeable battery is controlled by the controller 200 which monitors the charging current flowing into the battery. Preferably, the controller 200 is a PIC (Programmable Interrupt Controller) or another programmable or not programmable controller. The charging current measured by the controller 200 is adjusted by a PWM-(pulse width modulation)-output of the controller 200 to the voltage converter 100 having a switching element, e.g. the FET 101. Using PWM-based controlling both the frequency f=1/T and the duty cycle D can be adjusted according to predetermined data. Thus, the charging current can be adjusted without generating too much heat.

Therefore, a universal charging device for rechargeable batteries 300 can be provided by controlling the duty cycle D of a DC-DC converter 100 according to the current flowing to the battery 300 to be charged. In this universal charging device a power supply having a fixed output voltage V_{DD} will be used instead of an adjustable, and thus expensive power supply. Further, the problem of heating the battery 300, which may be dangerous to the battery 300, is solved by a driving method of the universal charging device based on a pulse-width-modulation. Additionally, by this driving method the universal charging device will be also well adjustable to different types of rechargeable batteries. Especially, the universal charging device can be automatically adapted to both batteries having a low voltage as well as those having a high voltage.

## Claims

1. A universal charging device for charging a rechargeable battery, comprising:
a voltage converter (100) adapted for receiving a voltage (V_{DD}) from a direct current voltage source and to be connected to the battery (300), having a switching element (101) for applying a direct voltage (V_{DD}) to said battery (300);
a controller (200) to be connected to the voltage converter (100), wherein the controller (200) is designed to measure a charging current flowing to the battery (300) and to control the switching element (101) on a pulse-width-modulation basis.

2. The universal charging device according to claim 1, **characterized in that** the voltage converter (100) is a DC-DC converter.

3. The universal charging device according to claim 1 or 2, **characterized in that** the voltage converter comprises a buck converter.

4. The universal charging device according to claim 1 or 2, **characterized in that** the voltage converter comprises a boost converter.

5. The universal charging device according to anyone of claims 1 to 4, **characterized in that** the voltage converter (100) comprises an inductance (103).

6. The universal charging device according to anyone of claims 1 to 5, **characterized in that** the voltage converter comprises a capacitance.

7. The universal charging device according to claim 1, **characterized in that** the voltage converter (100) comprises a transformer.

8. The universal charging device according to anyone of claims 1 to 7, **characterized in that** the switching element (101) is controlled by adjusting the frequency (f=1/T) and/or the duty cycle (D) of a procedure changing the electrical conductance status of said switching element (101).

9. The universal charging device according to anyone of claims 1 to 8, **characterized in that** the switching element (101) is a field effect transistor (FET).

10. A method of charging a rechargeable battery, comprising the steps of:
applying a direct voltage (V_{DD}) to said battery (300) by a switching element (101) of a voltage converter (100);
monitoring a charging current flowing into the battery (300); and
controlling said switching element (101) on a pulse-width-modulation basis.

11. The method according to claim 10, **characterized by** controlling a switching frequency (f=1/T) and/or a duty cycle (D) of a procedure changing the electrical conductance status of said switching element (101).

12. Arrangement for charging a battery (300) comprising a controller (200) and an universal charging device according to one or several of claims 1 to 9.
